# FASCICULE DE BREVET EUROPEEN

(11) **EP 0 348 929 B1**
(45) Date de publication et mention de la délivrance du brevet: **24.11.1993**
(21) Numéro de dépôt: 89111753.3
(22) Date de dépôt: 28.06.1989
(51) Int. Cl.: G06K 7/06

(54) **Lecteur de carte à puce**
Chipkartenabtaster
Chip card reader

(30) Priorité: 01.07.1988 FR 8808934
(43) Date de publication de la demande: 03.01.1990
(73) Titulaire: ALCATEL CIT, 75008 Paris (FR)
(72) Inventeur: Pernet, Michel, F-25300 Pontarlier (FR)
(74) Mandataire: Weinmiller, Jürgen

(56) Documents cités:
- EP-A- 0 198 739
- EP-A- 0 263 746
- DE-A- 3 602 668
- FR-A- 2 607 287

## Description

La présente invention concerne les lecteurs de carte à puce et, plus particulièrement, un tel lecteur de carte à puce qui soit pourvu de moyens mécaniques établissant une pression entre la carte insérée dans lecteur et les contacts de lecture.

On trouvera, dans la demande de brevet français n° 8715739, déposée le 13 novembre 1987 par la Société Demandresse, une description des lecteurs de carte à puce en général et d'un cadre de contact pour carte à puce, en particulier. Il y est indiqué qu'un tel lecteur comprend des moyens de guidage ou de positionnement de carte, éventuellement des moyens servant à vérifier qu'une carte est présente dans le lecteur, dans la position adéquate pour la lecture, ainsi que des éléments de contact qui assurent le raccordement électrique avec des plages conductrices de la carte à puce, par lesquelles sont établis des circuits intéressant l'appareil incorporant le lecteur de carte à puce. Le cadre de contact est un élément unitaire remplissant les fonctions énoncées. Il permet de faire que, compte tenu des tolérances de fabrication, la flexion des éléments de contact, à l'insertion d'une carte à puce soit toujours telle que la pression de contact requise soit obtenue.

Une telle conception présente l'inconvénient que les éléments de contact appliquent la pression de contact mentionnée, dès le début de l'insertion de la carte, avant que celle-ci soit en position de lecture. Il en résulte un frottement inutilement forte de ces éléments de contact sur la carte en causant une usure excessive. En raison de cet état de fait, la pression de contact recherchée est la plus faible qui donne encore des performances satisfaisantes en matière de contact électrique. Par ailleurs, comme mentionné dans cette demande antérieure, la pression des éléments de contact sert également à retenir la carte dans le lecteur, à l'encontre la force de rappel d'un contact de fin de course, par exemple. Dans la mesure où cette pression de contact est limitée, il s'ensuit aussi que la pression de contact du contact de fin de course est également limitée.

Ces différentes considérations conduisent à ce qu'il soit souhaitable que la pression de contact entre les éléments de contact du lecteur de carte à puce et les plages de contact de la carte à puce soit établie, au moins partiellement par des moyens mécaniques intervenant alors que la carte est sensiblement dans la position de lecture pour l'établissement des circuits avec la carte à puce.

La présente invention a précisément pour objet un lecteur de carte à puce tel que défini par les revendications jointes

Avantageusement, la position des éléments de contact et les caractéristiques élastiques de ces éléments de contact sont tels que les éléments de contact frottent légèrement sur la carte en cours d'insertion, avant que celle-ci soit cambrée et que s'établisse la pression de contact requise.

On obtient ainsi les avantages suivants : le contact électrique des éléments de contact sur la carte durant l'insertion de celle-ci, permet d'évacuer l'électricité statique éventuellement accumulée par la carte avant son insertion ; le contact mécanique des éléments de contact sur la carte permet d'obtenir, sans usure excessive, l'auto-nettoyage des éléments de contact ; la pression exercée par le levier basculant fournit une pression de contact accrue et une meilleure force de rétention de la carte.

Des lecteurs de carte à puce dans lesquels la pression entre la carte et les contacts évolue au cours de l'insertion de la carte, sont connus des brevets EP-A-0 263 746 et FR-A-2 607 287.

Les différents objets et caractéristiques de la présente invention seront maintenant exposés dans de plus amples détails dans la description qui va suivre , donnée a titre d'exemple non limitatif, en se reportant aux figures annexées qui représentent :
- les figures 1, 2, 3 et 4 des vues de dessous, de côté, de dessus et de bout d'un cadre de contact pour lecteur de carte à puce comportant le levier basculant de la présente invention,
- les figure 5 et 6, deux vues en coupe agrandies du cadre de contact des figures précédentes, avec une carte partiellement insérée et une carte en insertion complète.

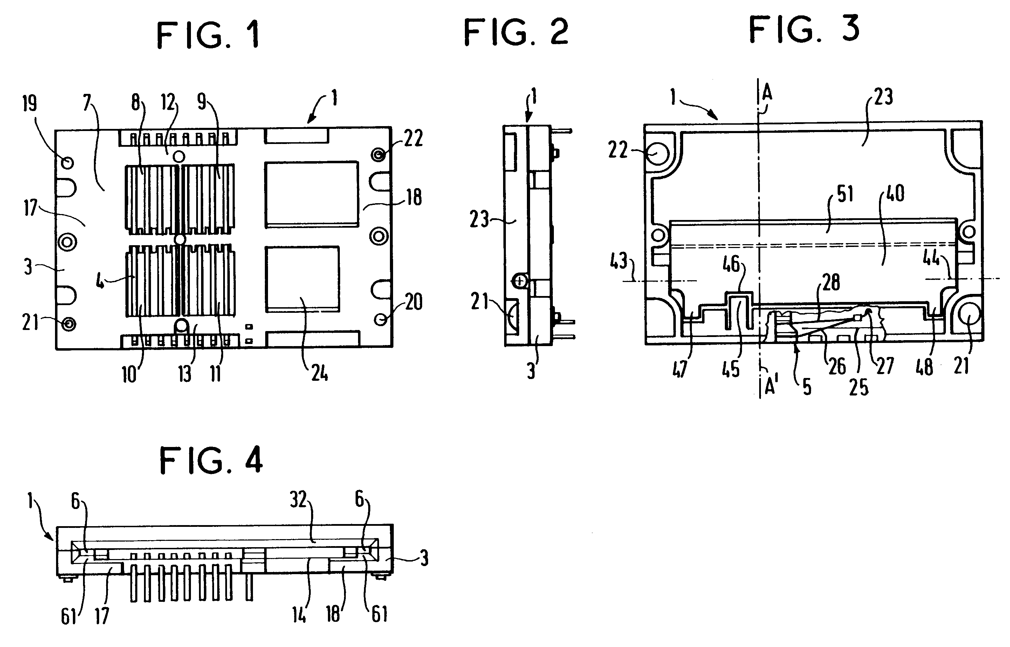

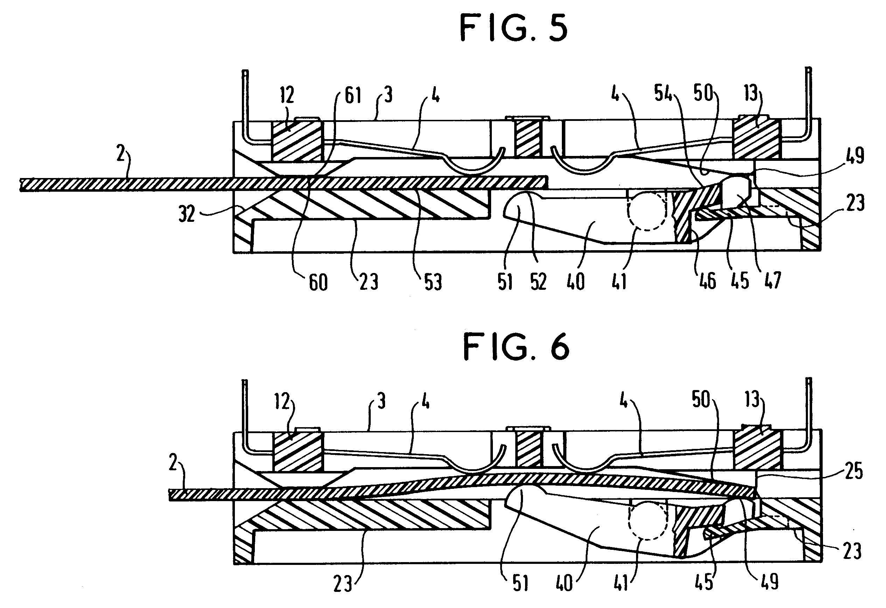

On a représenté, aux figures 1 à 4, un cadre de contact 1 conçu conformément à la présente invention. Ce cadre 1 comprend essentiellement une pièce de base en matière moulée isolante 3 jouant tout à la fois le rôle de support d'éléments de contact 4, servant au raccordement à la puce d'une carte non représentée, de support d'un contact de fin de course 5 (fig. 3), indiquant qu'une carte est présente dans le lecteur et qu'elle est en position adéquate pour être lue, et, au moins, de support de glissières 6 (fig. 6), servant au guidage de la carte et destinées à la conduire dans la position de lecture comme indiqué plus loin.

A cette fin, le cadre de contact 1 comprend un cadre intérieur 7 constitué par les parties du cadre 1 délimitant les fenêtres de raccordement 8, 9, 10, 11. Les éléments de contact 4 s'étendent dans ces fenêtres, à partir des barreaux 12, 13 dans lesquels ils sont surmoulés. Les éléments de contact 4 sont profilés et font saillie au-dessus du plan 14 de la surface intérieure de la pièce 3 (fig.4). Ils doivent venir en contact avec les plages de contact de la zone de raccordement de la carte à puce, lorsque celle-ci est complètement insérée dans le lecteur de carte à puce.

Ce cadre intérieur 7 (fig. 1 et 4), est prolongé par deux ailes 17, 18 qui se terminent, à l'opposé du cadre intérieur 7, par les glissières 6. En fait, les glissières 6 sont formées dans la matière de la pièce 3 sur laquelle est disposée une pièce en matière isolante moulée 23 formant couvercle. Cette pièce de couvercle 23 est précisément positionnée par rapport au cadre 1 par les pieds de centrage 19, 20 et y est fixée par des rivets 21, 22. Elle guide une carte insérée dans le cadre de contact, dont elle enserre les bords.

Comme on peut le voir à la figure 1, les ailes 17, 18 sont avantageusement ajourées, pour économiser la matière, par des évidements 24.

Le cadre de contact 1 porte encore le contact de fin de course 5 et une butée de fin de course 25, indiqués dans un arraché de la figure 3. Ce contact de fin de course 5 est un contact de repos, s'ouvrant lorsque la carte, peu avant de venir en appui sur la butée de fin de course 25, actionne la lame mobile 26 en appuyant sur son extrémité 27, ce qui la sépare de la lame de contact fixe 28.

On remarquera accessoirement que l'ouverture pour l'insertion de la carte à puce entre les pièces 1 et 23 est chanfreinée, en 32, comme il est d'usage.

Les dispositions faisant plus particulièrement l'objet de la présente invention sont illustrées aux figures 3, 5 et 6, auxquelles on se réfèrera maintenant.

Un levier basculant 40 est agencé dans la pièce 23. Il pivote sur deux pivots 41 dont les axes sont mentionnés à la figure 3, en 43 et 44. Les pivots 41 peuvent être des tourillons saillant du levier 40 dans des alvéoles de la paroi de la pièce de couvercle 23. Ce levier 40 est retenu dans la position de repos illustrée à la figure 5 par un moyen de rappel élastique, en l'occurrence une languette 45 venue de la matière de la pièce 23 et qui est engagée dans un évidemment 46 du levier 40, poussant celui-ci vers le haut (figures 5 et 6), jusqu'à ce qu'il s'appuie contre la pièce 3, par des cames d'actionnement 47, 48. Plus précisément, la surface 49 des cames 47, 48 vient en appui contre une rampe de guidage 50 agencée sur la pièce de base 3. A l'opposé des cames 47, 48, par rapport aux pivots 41, le levier 40 présente une came de pression 51.

Les dimensions de ce levier, en particulier, sont telles que, lorsqu'il est au repos, dans la position représentée à la figure 5, la surface 52 de la came de pression 51 est au même niveau que la surface supérieure de la pièce 23, sur laquelle glisse une carte à puce 2 en cours d'insertion. Cette carte est d'abord guidée par une partie d'entrée (60) de la glissière 6 comprenant la surface 53 de la pièce 23 et une portée 61 de la pièce 3. Après cette portée 61, la carte en insertion s'avance et soulève légèrement les éléments de contact 4, ce qui permet l'élimination de l'électricité statique chargée à la surface de la carte et assure le nettoyage des surfaces de contact, jusqu'à ce qu'elle atteigne la surface 54 du levier 40. L'extrémité avant de la carte 2 peut alors se soulever, mais elle vient en appui contre la rampe 50 constituant la partie de fin de course de la glissière 6. A partir de ce moment, la carte 2, sous la poussée de l'utilisateur, provoque le basculement du levier 40 sur son pivot 41, la came 47 s'effaçant, tandis que la came de pression 51 se soulève. La position finale est représentée à la figure 6. Maintenue en appui contre la rampe 50 et arrêtée contre la butée 25, la carte 2 a amené le levier 40 dans une position telle qu'il cambre la carte 2 vers le haut par la pression exercée vers le haut par la came de pression 51. Cette pression s'exerce au niveau des extrémités actives des éléments de contact 4. Celles-ci sont entraînées vers le haut et les caractéristiques élastiques des éléments de contact déterminent la pression de contact résultante, en fonction de la course qu'ils accomplissent. Cette course est déterminée par les caractéristiques du levier et l'épaisseur de la carte, c'est-à-dire de façon précise. Il est à remarquer que la carte est alors retenue par friction entre la rampe 50 et la languette de rappel 45, ainsi qu'entre les éléments de contact 4 et la came de pression 51 du levier 40.

A l'extraction de la carte, la languette 45 remettra le levier 40 dans la position de la figure 5.

## Revendications

1. Lecteur de carte à puce comprenant des moyens de guidage ou de positionnement de carte, éventuellement des moyens servant à vérifier qu'une carte est présente dans le lecteur, dans la position adéquate pour la lecture, des éléments de contact qui assurent le raccordement électrique avec des plages conductrices de la carte à puce, par lesquelles sont établis des circuits intéressant l'appareil incorporant le lecteur de carte à puce, ainsi qu'un levier basculant (40) comportant un pivot central (41), une came d'actionnement 47), d'un côté du pivot, sur laquelle vient appuyer la carte (2) en insertion, à l'extrémité de son trajet d'insertion, pour le faire pivoter d'une position de repos dans une position de pression ainsi que des moyens de rappel élastique (45, 46) maintenant le levier basculant en position de repos, lorsqu'il n'est pas sous l'influence d'une carte insérée dans le lecteur, caractérise en ce que le levier basculant comprend en outre une came de pression (51), de l'autre côté du pivot, qui vient s'appliquer sur la carte, lorsque le levier basculant est en position de pression, de manière à cambrer la carte en direction des éléments de contact (4),

2. Lecteur de carte à puce conforme à la revendication 1, caractérisé en ce que lesdits moyens de guidage forment des glissières (6) comprenant une partie d'entrée et une partie de fin de course, ce qui permet le cambrage de la carte entre ces deux parties.

3. Lecteur de carte à puce conforme à la revendication 2, caractérisé en ce que lesdits moyens de guidage comprennent une partie de fin de course formant une rampe (50), de manière à guider la carte vers ladite came d'actionnement (47).

4. Lecteur de carte à puce conforme à la revendication 1, 2 ou 3, caractérisé en ce que lesdits moyens de rappel élastique comprennent une languette élastique (45) qui est partie intégrante soit du levier soit desdits moyens de guidage.

5. Lecteur de carte à puce conforme à l'une quelconque des revendications qui précèdent, caractérisé en ce que ledit levier basculant est incorporé dans un boitier de contact pour lecteur de carte à puce regroupant tous les moyens relatifs à l'établissement de circuits électriques avec une carte à puce insérée dans le lecteur.

## Claims

1. An IC card reader comprising card positioning or guide means, optionally means for verifying that the card is present in the reader in a position suitable for being read, contact elements for providing electrical connection with conducting tabs on the IC card, whereby circuits are established with the apparatus containing the IC card reader, and a rocking lever (40) including a central pivot (41), an actuating cam (47) on one side of the pivot against which a card (2) being inserted comes to bear at the end of its insertion stroke, thereby pivoting the lever from a rest position to a pressure-applying position, and resilient return means (45, 46) returning the rocking lever to its rest position when it is not engaged by a card inserted in the reader the reader being characterized in that the rocking lever comprises in addition a pressure cam (51) on the other side of the pivot for bearing against the card when the rocking lever is in its pressure-applying position, thereby bending the card towards the contact elements (4).

2. An IC card reader according to claim 1, characterized in that said guide means constitute slideways (6) comprising inlet portions and end-of-stroke portions, thereby enabling the card to be bent between said two portions.

3. An IC card reader according to claim 2, characterized in that said guide means include end-of-stroke portions forming ramps (50) for guiding the card towards said actuating cam (47).

4. An IC card reader according to claim 1, 2, or 3, characterized in that said resilient return means comprise a resilient tongue (45) integrally formed either with the lever or else with said guide means.

5. An IC card reader according to any preceding claim, characterized in that said rocking lever is incorporated in a contact housing for the IC card reader carrying all of the means for establishing electrical circuits with an IC card inserted in the reader.

## Patentansprüche

1. Chipkartenleser mit Führungs- oder Positioniermitteln für die Karte, eventuell Mitteln, die dazu dienen, festzustellen, ob eine Karte sich in der für das Lesen passenden Position im Leser befindet, Kontaktelementen, die den elektrischen Anschluß an leitende Bereiche der Chipkarte bewirken, durch die Stromkreise gebildet werden, die das den Chipkartenleser enthaltende Gerät betreffen, sowie einem Kipphebel (40), der einen zentralen Gelenkzapfen (41), einen Betätigungsnocken (47) auf einer Seite des Zapfens, auf den die einzuführende Karte (2) am Ende ihres Einführungswegs drückt, um ihn von einer Ruheposition in eine Druckposition zu schwenken, sowie Mitteln zum elastischen Rückholen (45, 46), die den Kipphebel in der Ruhestellung halten, wenn er nicht unter dem Einfluß einer in den Leser eingeführten Karte ist, dadurch gekennzeichnet, daß der Kipphebel weiter einen Drucknocken (51) auf der entgegengesetzten Seite des Zapfens aufweist, der sich auf die Karte legt, wenn der Kipphebel in der Druckstellung ist, um die Karte in Richtung der Kontaktelemente (4) zu wölben.

2. Chipkartenleser nach Anspruch 1, dadurch gekennzeichnet, daß die Führungsmittel Schienen (6) bilden, die einen Eingangsbereich und einen Endbereich aufweisen, was das Wölben der Karte zwischen diesen beiden Bereichen erlaubt.

3. Chipkartenleser nach Anspruch 2, dadurch gekennzeichnet, daß die Führungsmittel einen Endbereich aufweisen, der eine Rampe (50) bildet, um die Karte zum Betätigungsnocken (47) zu führen.

4. Chipkartenleser nach den Ansprüchen 1, 2 oder 3, dadurch gekennzeichnet, daß die elastischen Rückholmittel eine elastische Zunge (45) aufweisen, die integraler Teil entweder des Hebels oder der Führungsmittel ist.

5. Chipkartenleser nach einem beliebigen der vorhergehenden Ansprüche, dadurch gekennzeichnet, daß der Kipphebel in ein Kontaktgehäuse für den Chipkartenleser integriert ist, das alle Mittel zur Herstellung elektrischer Kreise mit einer in den Leser eingeführten Chipkarte zusammenfaßt.
